(19) Europäisches Patentamt
European Patent Office
Office européen des brevets

(11) Publication number: 0 169 913
A1

(12) **EUROPEAN PATENT APPLICATION**

published in accordance with Art. 158(3) EPC

(21) Application number: 85900758.5

(22) Date of filing: 29.01.85

Data of the international application taken as a basis:

(86) International application number:
PCT/JP85/00036

(87) International publication number:
WO85/03370 (01.08.85 85/17)

(51) Int. Cl.[4]: G 06 F 9/06
G 06 F 12/14, G 05 B 19/02

(30) Priority: 30.01.84 JP 14936/84

(43) Date of publication of application:
05.02.86 Bulletin 86/6

(84) Designated Contracting States:
DE FR GB

(71) Applicant: FANUC LTD
3580, Shibokusa Aza-Komanba Oshino-mura
Minamitsuru-gun Yamanashi 401-05(JP)

(72) Inventor: SHIMA, Atsushi
1-4-1-307, Nukuikita-machi
Koganei-shi Tokyo 184(JP)

(72) Inventor: INOUE, Hideaki
Hamada-Bldg. 1-5, 3-15-101, Minamidaira
Hino-shi Tokyo 191(JP)

(74) Representative: Billington, Lawrence Emlyn et al,
HASELTINE LAKE & CO Hazlitt House 28 Southampton
Buildings Chancery Lane
London WC2A 1AT(GB)

(54) **METHOD OF ALTERING PROGRAM PROTECTING RANGE.**

(57) A method of altering the range in which a program is protected in a numerically controlled machine for preventing the correction of the program within in a range specified by the minimum value (LOKMIN) and the maximum value (LOKMAX) of the program number and the display on a display unit (107) by storing the minimum value (LOKMIN) and the maximum value (LOCKMAX), which method comprises the step of inputting a key number (KEYA) from an MDI unit (108), the step of comparing with a processor (101) the inputted key number (KEYA) with a key number (MASKA) registered in advance in a non-volatile memory (106), the step of altering the program protecting range only if KEYA matches MASKA, and the step of altering the program protecting range by inputting at least one of the minimum value and the maximum value of the program number from the MDI unit (108).

./...

EP 0 169 913 A1

FIG. 3

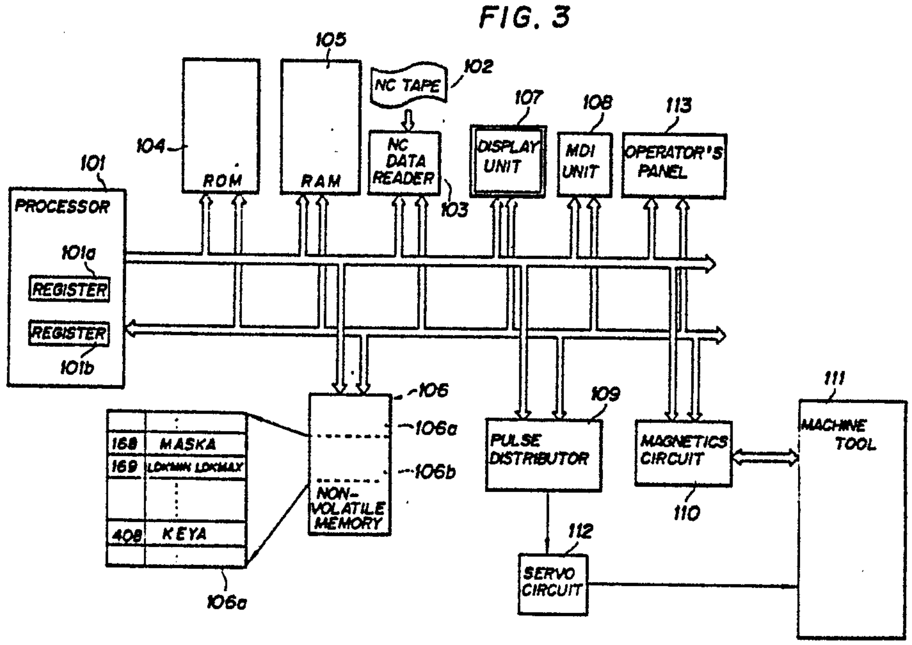

101
PROCESSOR
101a
REGISTER
REGISTER
101b
104
ROM
105
RAM
NC TAPE
102
NC DATA READER
103
107
DISPLAY UNIT
108
MDI UNIT
113
OPERATOR'S PANEL
106
106a
106b
NON-VOLATILE MEMORY
168 MASKA
169 LDKMIN LDKMAX
408 KEYA
106a
109
PULSE DISTRIBUTOR
MAGNETICS CIRCUIT
110
111
MACHINE TOOL
112
SERVO CIRCUIT

DESCRIPTION

METHOD OF ALTERING PROTECTED REGION OF A PROGRAM

## Technical Field

This invention relates to a method of altering a program protection region and, more particularly, to a method that makes it possible to alter a program protection region that is to be sageguarded at least against modification and display, or in other words, that makes it possible to alter the minimum and maximum values of program numbers to be protected.

## Background Art

Modern NC units possess a function referred to as a custom macro function. A custom macro is for pre-registering a certain operation composed of a certain group of instructions in a memory in the manner of a subprogram, with one instruction being made to represent the registered operation. The operation is executed merely by inserting this instruction in an NC program. The chief characterizing features of a custom macro are that the variables in the custom macro can be changed, arithmetic operations can be performed among variables, and the variables can be set to actual values. Fig. 1 is a view for describing the relationship between an ordinary NC program and a custom macro. Numeral 1 denotes an ordinary NC program, and numeral 2 represents a custom macro. A macro call instruction

$$G65\ P\square\square\ ..\ \square\ Ax_s\ By_s\ Cx_e\ Dy_e\ E(n+1);$$

has been inserted in the NC program at a suitable location. Here G65 is a macro call instruction, the letter of the alphabet P is an address word indicating that the numerical value which follows it is a program number, □ □ ..□ indicates the name (program number) of the custom macro, and the letters of the alphabet A, B, C, D and E are word addresses which designate actual numbers for the variables used in the custom macro 2. The correspondence between a word address and a variable used in the custom macro is stored beforehand in an internal memory of the NC unit. The word addresses A, B, C, D and E correspond to variables #1, #2, #3, #7 and #9, respectively. As an example, the custom macro 2 is programmed by using the variables #1, #2, #3, #7, #9, etc. to include an instruction for creating line-at angles at (n+1)-number of equidistantly spaced positions A0, A1, A2,... An located on a straight line LN connecting a starting point $P_s(x_s, y_s)$ and end point $P_e(x_e, y_e)$, as shown in Fig. 2. An instruction M99; indicating a return to the NC program 1 is inserted at the end of the custom macro. Accordingly, when the abovementioned custom macro call instruction is read during the course of processing executed based on the NC program, the NC unit calls the custom macro designated by the program number P□ □ ...□ and executes machining processing for the line-at angle shown in Fig. 2 by performing the operations

$\#1 = x_s$, $\#2 = y_s$, $\#3 = x_e$, $\#7 = y_e$, $\#9 = (n+1)$

After completing the machining processing, the NC unit responds to M99; by performing NC processing based on the NC program 1.

Thus, NC processing tailored to the user, which cannot be commanded by an EIA or ISO code, is capable of being performed by previously registering a number of custom macros in a memory and inserting, in the NC program, the custom macro call instruction G65, program number and values specifying the variables.

Thus, according to a custom macro function, various forms of specialized processing tailored to the particular needs of the user can be executed without modifying the software of the NC unit. In other words, when a machine maker or end user wishes a machine to perform a specialized operation, or when the machine is of a special type and performs a specialized operation, these specialized operations can be numerically controlled by using custom macros.

There are many cases where a machine maker or end user creates a custom macro by using its own know-how, so there is a need to conceal the contents of the macro from other parties. It is also necessary that the contents of a custom macro stored in an NC unit not be freely modifiable. Accordingly, an arrangement is adopted in which the minimum and maximum values (protected region) of program numbers of programs to be protected are stored beforehand in an NC unit, the contents of the programs having the numbers in this region are prevented from being output to an I/O unit of a display device or the like, and these contents are prevented from being modified by a manual data input unit (MDI). Since it is necessary for the operator to check the contents for maintenance purposes in the event of a malfunction, the arrangement is such that a secret number is stored in advance to allow the program safeguard to be removed only when the secret number is entered.

In conventional NC units, the program protection region is fixed and cannot be altered. This makes it impossible to cope with situations where it is desired to alter the program protection region because the quantity of programs to be protected is too large, or because of some other reason. If the program protection region were to be freely alterable, then another party would be able to narrow the protected region and remove the program from the protected region, thus allowing the contents of the program to be viewed at will. Program protection would thus loose its meaning.

An object of the present invention is to provide a method of altering a program protection region, whereby a region of protected programs can be altered while maintaining the secrecy of the programs.

Another object of the present invention is to provide a method of altering a program protection region, whereby a region of protected programs can be altered only by one having knowledge of a secret number.

A further object of the present invention is to provide a method of altering a program protection region, whereby a region of protected programs can be altered only when there is agreement between an entered secret number and a secret number registered previously in an NC unit.

Disclosure of the Invention

The present invention provides a method of altering a program protection region in a numerical control unit in which minimum and maximum values of program numbers are stored beforehand so that a program having a program number within the region specified by the minimum and maximum values is safeguarded against modification and output. The method includes a step of entering a secret number, a step of comparing the entered secret number with a secret number registered in advance, and a step of enabling alteration of the program protection region only when the entered secret number and secret number registered in advance agree. According to the present invention, a protected region can be altered only by one who knows the secret number. As a result, the protected region is capable of being altered while the secrecy of the programs is maintained.

Brief Description of the Drawings

Figs. 1 and 2 are views for describing a custom macro function, Fig. 3 is a block diagram of an NC unit for practicing the program protection region alteration method of the present invention, Fig. 4 is a flowchart of processing according to the present invention, and Fig. 5 is a view showing the surface of an MDI unit.

Best Mode for Carrying Out the Invention

Fig. 3 is a block diagram of an NC unit for practicing the program protection region alteration method of the present invention, Fig. 4 is a flowchart of processing, and Fig. 5 is a view showing the surface of an MDI unit.

In Fig. 3, numeral 101 denotes a processor, 102 an NC tape storing NC data, 103 an NC data reader, 104 an ROM storing a control program, 105 a RAM, 106 a non-volatile memory for storing various parameters and programs, 107 a display unit, 108 an MDI unit, 109 a pulse distributor, 110 a magnetics circuit for implementing an exchange of data with a machine tool 111, 112 a servo circuit, and 113 an operator's panel. A program storage area 106a in the non-volatile memory 106 stores a plurality of programs read from the NC tape in advance. A parameter storage area 106b of the non-volatile memory stores various parameters. The parameters relating to the present invention are a secret number (MASKA), a minimum value (LOKMIN) of a protected region, and a maximum value (LOKMAX) of the protected region. The secret number is stored in a storage area of a parameter number 168, and the minimum and maximum values of the protected region are stored at the four upper and four lower digits, respectively, of a storage area of a parameter number 169. A secret number (KEYA) for collation entered from the MDI unit 108 is stored at a parameter number 408.

When a mode switch on the operator's panel 113 is placed in the memory run position, a predetermined program number is entered from the MDI unit 108 and the system is started, the processor 101 calls the program having the entered program number from the non-volatile memory 106, stores the program in the RAM 105, reads NC data out of the RAM one block at a time starting from the beginning of the program and performs well-known numerical control processing. The processor 101 also checks whether the program number entered from the MDI unit 108 lies within the protected region. If the decision is negative, the processor feeds one frame of NC data from the RAM 105 to the display unit 107, where the data are displayed. Thereafter, the contents displayed are altered block by block. [It is assumed here that a PRGRM key K6 (Fig. 5) on the MDI unit, which key is an NC data display request key, is being pressed.] If the program number does lie in the protected region, on the other hand, the NC data are not displayed on the display unit 107, even if the PRGRM key K6 is pressed.

If the program number does not lie in the protected region, the NC data are displayed on the display unit 107. As numerical control processing progresses while these data are being displayed, a custom macro call instruction is read out of the RAM 105 at a certain time. When this occurs, the processor 101 checks whether the program number contained in this instruction lies in the protected region. If the program number does lie in the protected region, the contents of the custom macro are not displayed on the display unit and, hence, these contents cannot be altered while the custom macro is being executed. If the program number does not lie in the protected region, the contents of the custom macro are displayed in successive fashion.

Though the foregoing relates to a program protection operation in the memory-run mode, the protection operation is not limited thereto. As an example, the arrangement is such that MDI operation is inhibited during the execution of a custom macro whose program number is in the protected region. Further, even if the edit mode is established, the PRGRM key K6 is pressed and then a program number is entered, the contents of the program will not be displayed and cannot be modified so long as the program number falls within the protected region.

Processing for altering a protected region according to the present invention will now be described while referring to the flowchart of Fig. 4 and the view of Fig. 5 showing the surface of the MDI unit.

First, the mode selection switch on the operator's panel 113 is operated to establish the MDI mode.

In this mode a parameter key (PARAM key) K1 provided on the MDI unit 108 is pressed.

Next, an N key K2 is pressed, the parameter number 408 is entered from numeric keys K3 and an INPUT key K4 is pressed, whereupon a cursor moves to the parameter number 408.

Thereafter, a P key K5 is pressed, the secret number (KEYA) for collation is entered from the numeric keys K3, and the INPUT key K4 is pressed, whereupon the processor 101 stores the secret number (KEYA) for collation is a register 110a. The processor then reads the secret number (MASKA), which has been registered in the parameter storage area 106b (area of parameter number 168) of the non-volatile memory 106, and stores the secret number in a register 101b.

The processor then checks whether the entered secret number (KEYA) for collation agrees with the pre-registered secret number (MASKA).

If the secret number (KEYA) for collation does not agree with the secret number (MASKA), then the processor 101 waits for the next instruction from the operator without removing the program safeguard. Note that an act to alter the program protection region will be ignored from this point onward even if the operator makes the attempt.

If the secret number (KEYA) for collation agrees with the secret number (MASKA), the processor 101 sets the contents of the parameter number 168 to "0" to remove the program safeguard and then waits for the next instruction for altering the program protection region. It should be noted that when the area of parameter number 168 is "0", the processor 101 regards this as indicating that a secret number has not been set and does not execute the program protection operation.

Thereafter, the N key K2 on the MDI unit is pressed, the parameter number 169 is entered from the numeric keys K3 and the INPUT key K4 is pressed. When this is done, the processor reads the contents of the parameter number, namely the minimum value (LOKMIN) and maximum value (LOKMAX) of the protected region, out of the non-volatile memory 106 and applies the same to the display unit 107 to display them on the display screen.

Next, when the P key K5 is pressed and the minimum and maximum values of the program protection region are entered, these entered minimum and maximum values are stored in the storage area of parameter number 169 of non-volatile memory 106. Thereafter, these minimum and maximum values serve as the minimum and maximum values of the program numbers of the programs to be protected.

Finally, a new secret number is set in the area of parameter number 168 through similar processing, whereupon the operation for altering the program protection region ends.

Thus, as described above, a secret number is entered, the entered secret number is compared with a previously registered secret number, and the program protection region becomes capable of alteration only if the two numbers agree. This makes it possible to alter a program protection region while the secrecy of the programs is maintained.

CLAIMS:

1. A method of altering a program protection region in a numerical control unit in which minimum and maximum values of program numbers are stored beforehand so that a program having a program number within the region specified by said minimum and maximum values is safeguarded against modification and output, said method characterized by having a first step of entering a secret number, a second step of comparing said entered secret number with a secret number registered in advance, a third step of enabling alteration of the program protection region only when the two numbers agree, and a fourth step of altering the program protection region by entering at least the minimum value of a program number or the maximum value of a program number.

2. A method of altering a program protection region according to claim 1, characterized in that, in said third step, alteration of the program protection region is enabled by making the secret number registered in advance zero.

3. A method of altering a program protection region according to claim 2, characterized by having a fifth step of registering a new secret number after alteration of the program protection region.

4. A method of altering a program protection region according to claim 1, characterized in that said program protection region and secret numbers are stored as parameters in a non-volatile memory inside the numerical control unit.

FIG. 1

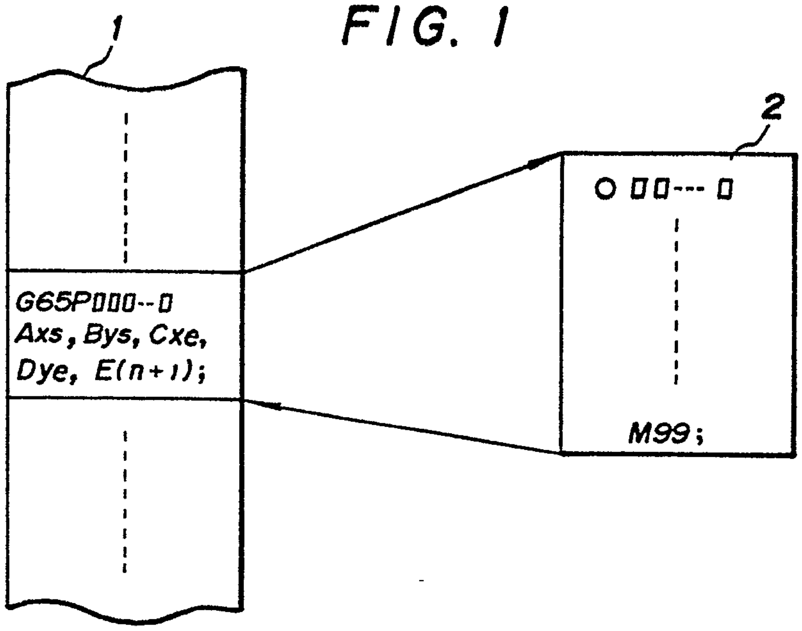


FIG. 2

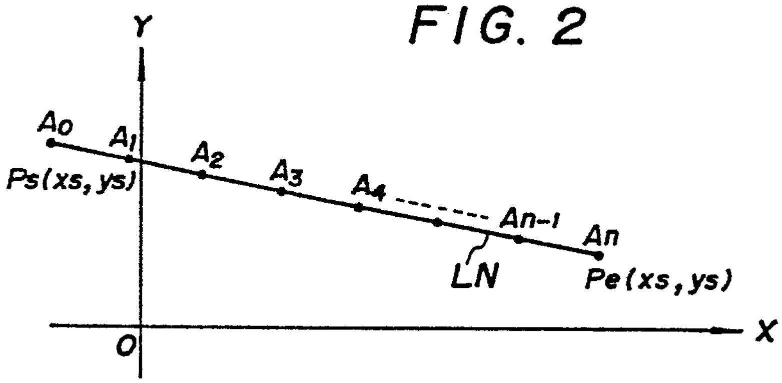


FIG. 5

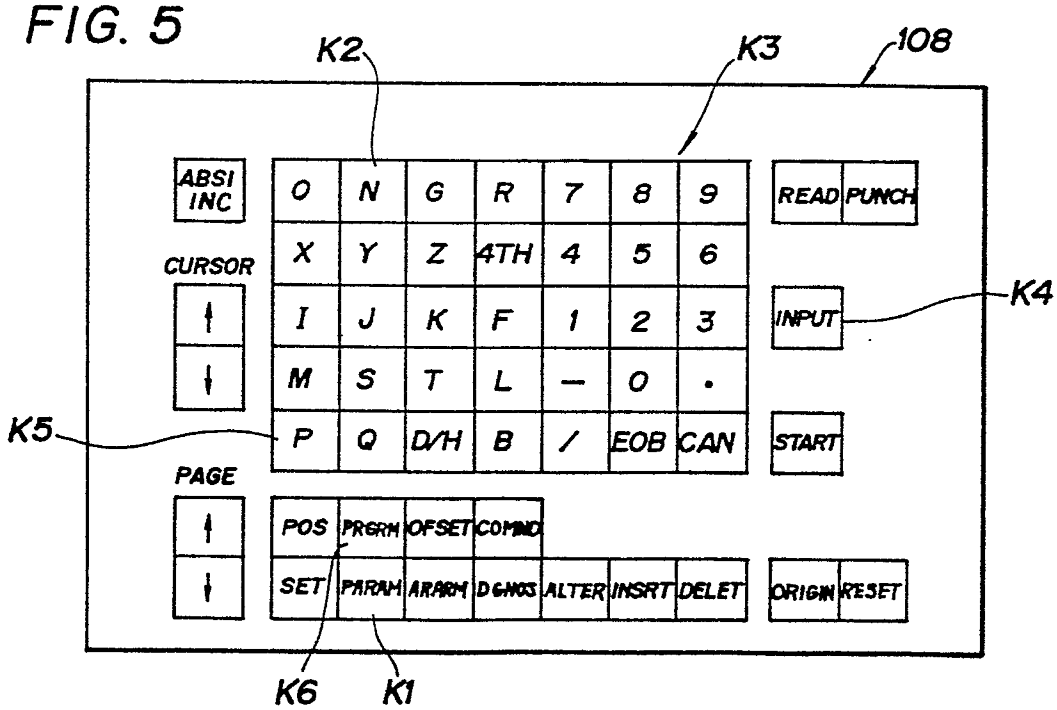

FIG. 3

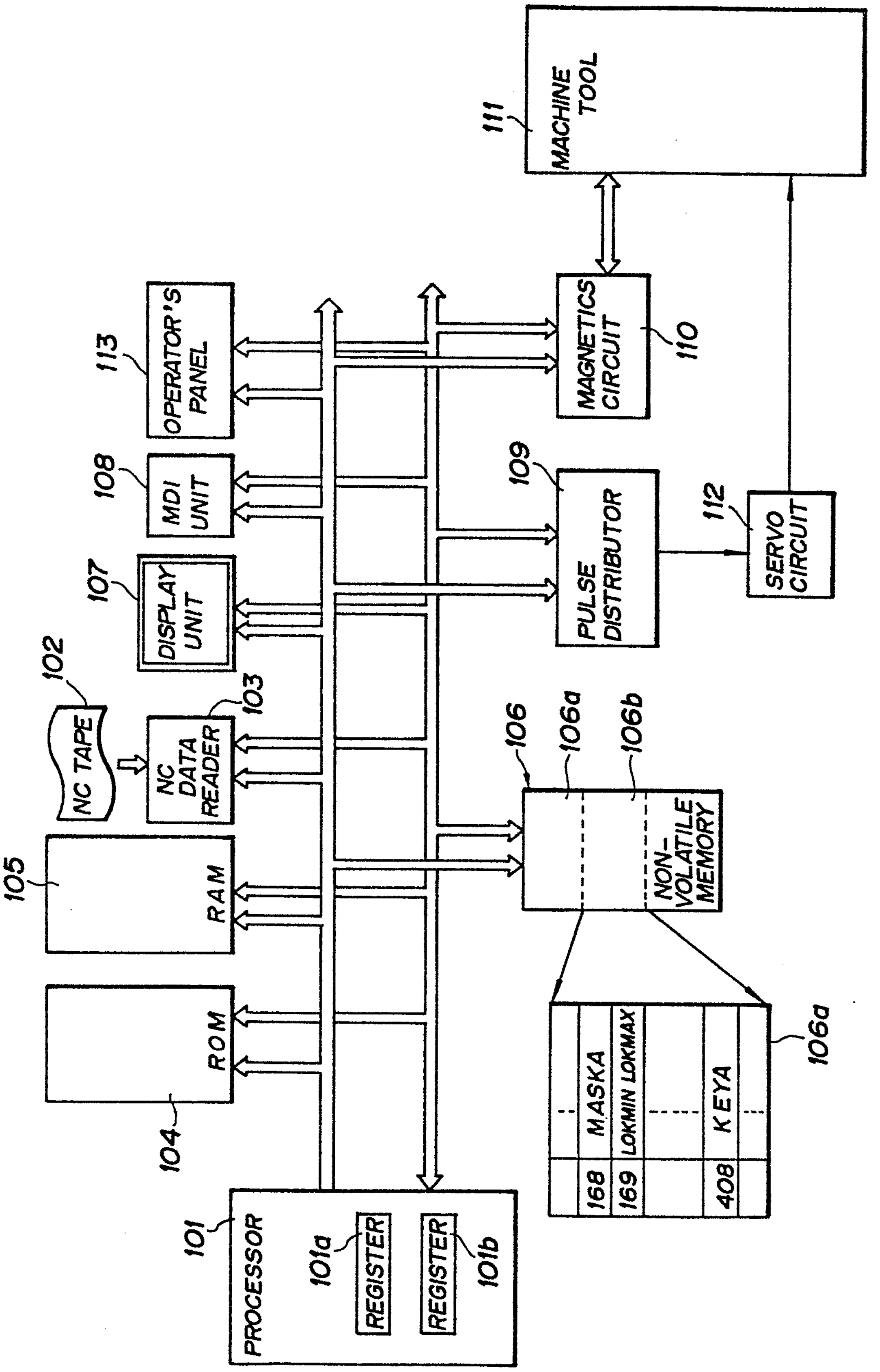

PROCESSOR
101
REGISTER
101a
REGISTER
101b
ROM
104
RAM
105
NC TAPE
102
NC DATA READER
103
DISPLAY UNIT
107
MDI UNIT
108
OPERATOR'S PANEL
113
NON-VOLATILE MEMORY
106
106a
106b
MASKA
LOKMIN LOKMAX
KEYA
168
169
408
PULSE DISTRIBUTOR
109
SERVO CIRCUIT
112
MAGNETICS CIRCUIT
110
MACHINE TOOL
111

FIG. 4

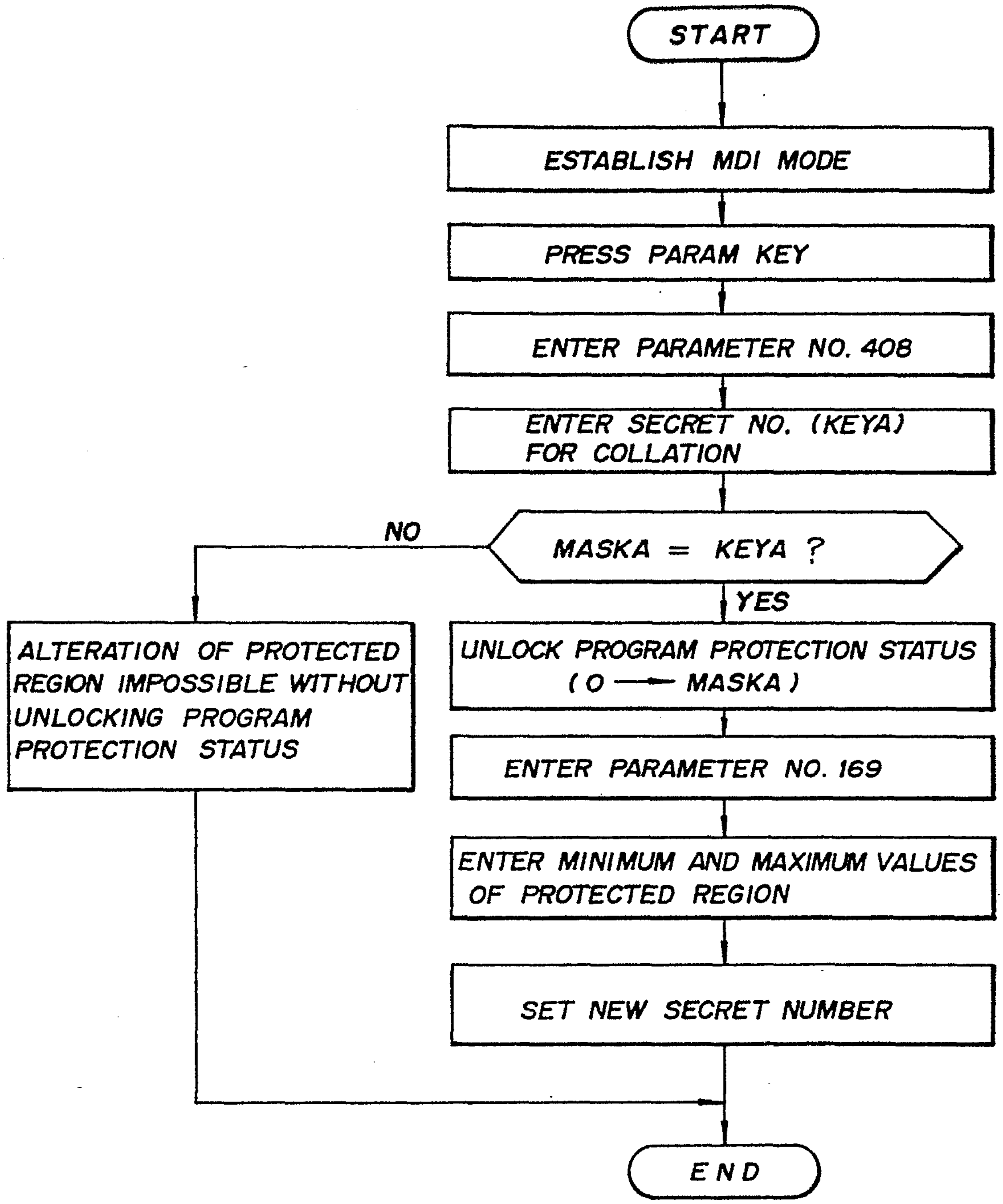
START
ESTABLISH MDI MODE
PRESS PARAM KEY
ENTER PARAMETER NO. 408
ENTER SECRET NO. (KEYA) FOR COLLATION
MASKA = KEYA ?
NO
YES
ALTERATION OF PROTECTED REGION IMPOSSIBLE WITHOUT UNLOCKING PROGRAM PROTECTION STATUS
UNLOCK PROGRAM PROTECTION STATUS (0 → MASKA)
ENTER PARAMETER NO. 169
ENTER MINIMUM AND MAXIMUM VALUES OF PROTECTED REGION
SET NEW SECRET NUMBER
END

# INTERNATIONAL SEARCH REPORT

International Application No. PCT/JP85/00038

**I. CLASSIFICATION OF SUBJECT MATTER** (if several classification symbols apply, indicate all) [3]

According to International Patent Classification (IPC) or to both National Classification and IPC

Int. $Cl^4$ G06F 9/06, G06F 12/14, G05B 19/02

**II. FIELDS SEARCHED**

Minimum Documentation Searched [4]

| Classification System | Classification Symbols |
|---|---|
| IPC | G06F 9/06, G06F 12/14 |

Documentation Searched other than Minimum Documentation to the Extent that such Documents are Included in the Fields Searched [5]

**III. DOCUMENTS CONSIDERED TO BE RELEVANT** [14]

| Category* | Citation of Document, [16] with indication, where appropriate, of the relevant passages [17] | Relevant to Claim No. [18] |
|---|---|---|
| A | JP, A, 57-127249 (Fujitsu Ltd.) 7 August 1982 (07. 08. 82) (Family nashi) | 1 - 4 |
| A | JP, A, 55-93594 (Sharp Corp.) 16 July 1980 (16. 07. 80) (Family nashi) | 1 - 4 |
| A | JP, A, 54-20624 (Mitsubishi Electric Corp.) 16 February 1979 (16. 02. 79) (Family nashi) | 1 - 4 |

* Special categories of cited documents: [15]

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

**IV. CERTIFICATION**

| Date of the Actual Completion of the International Search [2] | Date of Mailing of this International Search Report [2] |
|---|---|
| April 19, 1985 (19. 04. 85) | April 30, 1985 (30. 04. 85) |
| **International Searching Authority [1]** | **Signature of Authorized Officer [20]** |
| Japanese Patent Office | |